(19) Europäisches Patentamt

European Patent Office

Office européen des brevets

(11) **EP 1 377 031 A2**

(12) **EUROPEAN PATENT APPLICATION**

(43) Date of publication:
   **02.01.2004 Bulletin 2004/01**

(51) Int Cl.⁷: **H04N 1/60**

(21) Application number: **03076822.0**

(22) Date of filing: **12.06.2003**

(84) Designated Contracting States:
   **AT BE BG CH CY CZ DE DK EE ES FI FR GB GR HU IE IT LI LU MC NL PT RO SE SI SK TR**
   Designated Extension States:
   **AL LT LV MK**

(30) Priority: **24.06.2002 US 178886**

(71) Applicant: **EASTMAN KODAK COMPANY**
   **Rochester, New York 14650 (US)**

(72) Inventor: **Gindele, Edward Brooks,**
   **c/o Eastman Kodak Company**
   **Rochester, New York 14650-2201 (US)**

(74) Representative: **Weber, Etienne Nicolas et al**
   **Kodak Industrie,**
   **Département Brevets,**
   **CRT,**
   **Zone Industrielle**
   **71102 Chalon sur Saône Cedex (FR)**

(54) **Extending the dynamic range and adjusting the color characteristics of a digital image**

(57)   A method of extending the dynamic range and transforming the color appearance of a digital image includes receiving a source digital image from a capture medium wherein the source digital image includes a plurality of pixel values relating to at least three basic colors. The method further includes calculating a color correction transform by using a non-linear contrast function that is independent of the source digital image and which can be used to extend the dynamic range of the source digital image by correcting an under-exposure condition as a function of the capture medium; and a non-linear color adjustment function which can be used to correct color reproduction errors as a function of exposure associated with an under-exposure condition as a function of the capture medium; and using the color correction transform and the source of digital image to produce an extended dynamic range digital image.

Fig. 4

**Description**

The present invention relates to providing extended dynamic range of a digital image from limited dynamic range with improved color appearance.

Imaging systems designed to produce digital images from a capture medium such as a photographic film strip can encounter problems with color reproduction due to a variety of causes. If the spectral sensitivities of the film scanner hardware are not well matched to the spectral transmittances of the dye materials used in common film products, the digital pixel values representing a color neutral object, that is a spectrally neutral reflective photographed object, will shift in color in a manner that is linearly related to the scene exposure. Other causes of exposure related color reproduction problems include film material contrast mismatches between different color sensing layers and chemical process sensitivity of the film material.

In US-A-4,279,502, Thurm and others discloses a method for optical printing devices that includes determining color balanced copying light amounts from photometric data derived directly from the film without the use of film type specific parameter values. In this method, first and second color density difference functional correlation values are established from density values denoting the results of measurements at a plurality of regions of the photographic film strip which includes the original image being copied. These correlation values are then used for determining the copying light amounts for most of the originals on the photographic film strip. The light amounts for originals containing illuminant error or color dominant subjects are selected differently using empirically determined threshold values. To be effective, this method requires the establishment of two different, independent functional relationships that cannot capture the correct correlation among three primary color densities in the original image.

In commonly-assigned US-A-5,959,720 Kwon and others describe a similar method for optical printing devices that establishes a linear relationship between film exposure and the gray center color. The method disclosed by Kwon and others includes the steps of individually photoelectrically measuring the density values of the original film material in at least three basic colors at a plurality of regions of the original film material; and establishing a single, multidimensional functional relationship among the at least three basic colors representing an exposure-level-dependent estimate of gray for use as values specific to said length of the original material for influencing the light amount control in the color copying operation.

Both methods disclosed by Thurm and others and Kwon and others include deriving digital images from a film material, analyzing the digital images to establish an exposure dependent color balance relationship, and using the exposure dependent color balance relationship to improve the color appearance of photographic prints made by altering the amount of projected light through the film material onto a photographic paper receiver.

The technology described by Kwon and others is also used to improve the color appearance of photographic prints made in digital imaging systems. In these applications, the pixel values of the digital images derived by scanning the film material are modified for color balance. That is, a triplet of color pixel values representing the gray center of each digital image is calculated using the established multidimensional functional relationship. The triplet of color pixel values is subtracted from all the pixels of the digital image thus changing the overall color balance of the processed digital image. In addition, the multidimensional functional relationship can be used to modify the color appearance of pixels of the digital images on a pixel-by-pixel basis. However, there are still problems associated with Kwon and others' technique that relate to the non-linear photo response of the capture medium, in particular to pixels relating to under-exposed regions of the photographic film strip.

In commonly-assigned US-A-5,134,573, Goodwin discloses a method for adjusting the contrast of digital images derived from digitally scanned photographic film materials. The method improves the overall image contrast through the application of a sensitometric correction function in the form of a look-up-table (LUT) designed to linearize the photographic response of photographic film products. While the application of sensitometric correction function does improve the color contrast of the digital image pixel values corresponding to under-exposed regions of photographic film materials, it requires separate sensitometry correction functions for each of the three primary colors to be derived experimentally for the photographic film material.

It is an object of the present invention to provide a method of extending the dynamic range and transforming the color appearance of a digital image that corrects for the under-exposure problems associated with the photographic response of a capture medium.

This object is achieved in a method of extending the dynamic range and transforming the color appearance of a digital image including the steps of:

a) receiving a source digital image from a capture medium wherein the source digital image includes a plurality of pixel values relating to at least three basic colors;
b) calculating a color correction transform by using:

i) a non-linear contrast function that is independent of the source digital image and which can be used to extend the dynamic range of the source digital image by correcting an under-exposure condition as a function of the capture medium; and

ii) a non-linear color adjustment function which can be used to correct color reproduction errors as a function of exposure associated with an under-exposure condition as a function of the capture medium; and

c) using the color correction transform and the source of digital image to produce an extended dynamic range digital image.

The present invention corrects for the non-linear photo response characteristics associated with the digital image capture medium and corrects for contrast and color problems associated with under-exposure pixels and color problems associated with properly exposed digital images. The present invention makes use of color pixel information from a plurality of digital images on the same capture medium to develop a color correction transform. It has been recognized that in an under-exposure situation, it is the capture medium that is a source of problems.

FIG. 1 is a block diagram of digital photofinishing system suitable for practicing the present invention;
FIG. 2 is a block diagram of a film scanner and for performing the color transform method of the invention;
FIG. 3 is a plan view of portions of photographic film strips showing splicing of successive photographic film strip orders;
FIG. 4 is a block diagram showing the details of the digital image processor;
FIG. 5 is a graph showing the photo response of typical photographic film product;
FIG. 6 is a graph showing the photo response of typical photographic film product after having applied the initial color balance transform;
FIG. 7 is a graph showing the photo response of typical photographic film product after having applied the under-exposure color transform;
FIG. 8 is a graph showing the photo response of typical photographic film product after having applied the contrast sensitometry transform;
FIG. 9 is a graph showing the photo response of typical photographic film product used to calculate the contrast sensitometry transform; and
FIG. 10 is a graph showing the shape of the contrast sensitometry transform.

The present invention provides a method of generating an extended dynamic range digital image from a low dynamic range digital image. As will be disclosed in detail hereinbelow, the dynamic range transform includes a non-linear adjustment that is independent of the digital image and which corrects an under-exposure condition as a function of the capture medium. By using this dynamic range transform, the appearance of digital images captured on the same medium can be significantly improved for both contrast and in color.

In the following description, a preferred embodiment of the present invention will be described as a software program. Those skilled in the art will readily recognize that the equivalent of such software can also be constructed in hardware. Because image processing algorithms and systems are well known, the present description will be directed in particular to algorithms and systems forming part of, or cooperating more directly with, the method in accordance with the present invention. Other aspects of such algorithms and systems, and hardware and/or software for producing and otherwise processing the image signals involved therewith, not specifically shown or described herein, can be selected from such systems, algorithms, components and elements thereof known in the art. Given the description as set forth in the following specification, all software implementation thereof as a computer program is conventional and within the ordinary skill in such arts.

Still further, as used herein, the computer program can be stored in a computer readable storage medium, which can comprise, for example; magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program.

A digital image is comprised of one or more digital image channels. Each digital image channel is comprised of a two-dimensional array of pixels. Each pixel value relates to the amount of light received by an imaging capture device corresponding to the geometrical domain of the pixel. For color imaging applications a digital image will typically consist of red, green, and blue digital image channels but can include more color channels. Other configurations are also practiced, for example, cyan, magenta, and yellow digital image channels. Motion imaging applications can be thought of as a time sequence of digital images. Although the present invention describes a digital image channel as a two dimensional array of pixels values arranged by rows and columns, those skilled in the art will recognize that the present invention can be applied to mosaic (non-rectilinear) arrays with equal effect.

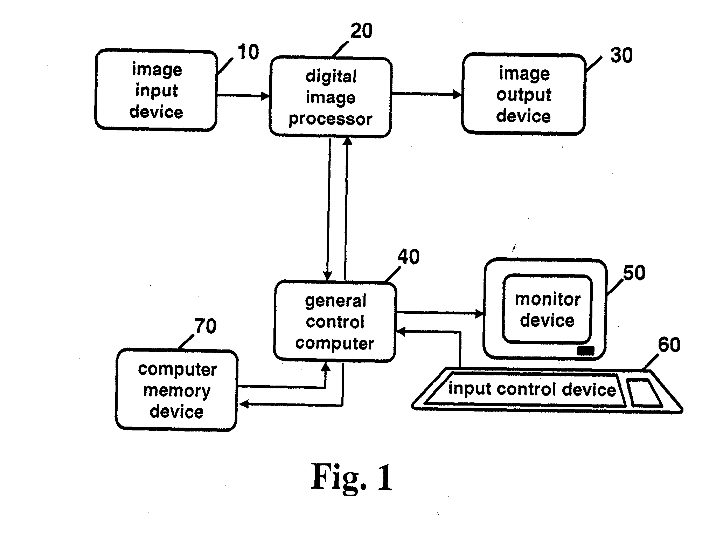

The present invention can be implemented in computer hardware. Referring to FIG. 1, the following description relates to a digital imaging system which includes image input device 10, an digital image processor 20, image output device 30, and a general control computer 40. The system can include a monitor device 50 such as a computer console or paper printer. The system can also include an input control device 60 for an operator such as a keyboard and or mouse pointer. Still further, as used herein, the present invention can be implemented as a computer program and can be stored in a computer memory device 70, that is, a computer readable storage medium, which can comprise, for example: magnetic storage media such as a magnetic disk (such as a floppy disk) or magnetic tape; optical storage media such as an optical disc, optical tape, or machine readable bar code; solid state electronic storage devices such as random access memory (RAM), or read only memory (ROM); or any other physical device or medium employed to store a computer program. Before describing the present invention, it facilitates understanding to note that the present invention is preferably utilized on any well known computer system, such as a personal computer.

The present invention can be used for digital images derived from a variety of imaging devices. For example, FIG. 1 can represent a digital photofinishing system where the image input device 10 can be a film scanner device which produces digital images by scanning conventional photographic images, for example, color negative film or slide film transparencies. The digital image processor 20 provides the means for processing the digital images to produce pleasing looking images on an intended output device or media. The present invention can be used in conjunction with a variety of output devices which can include a digital color printer and soft copy display.

*The scanner*

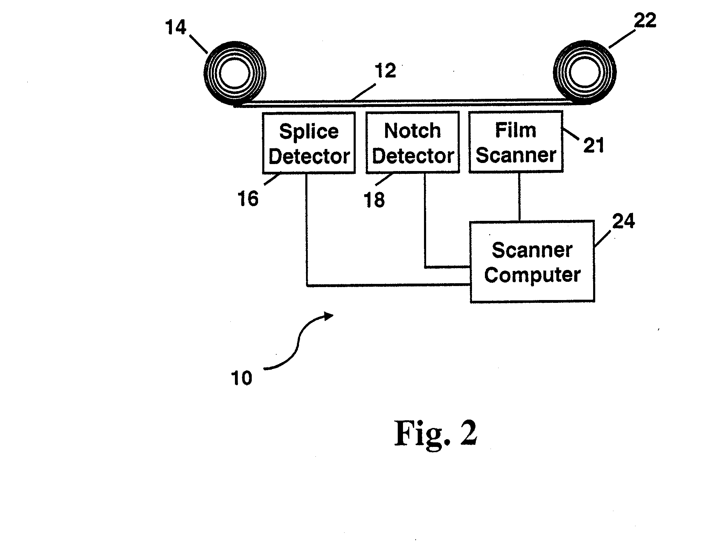

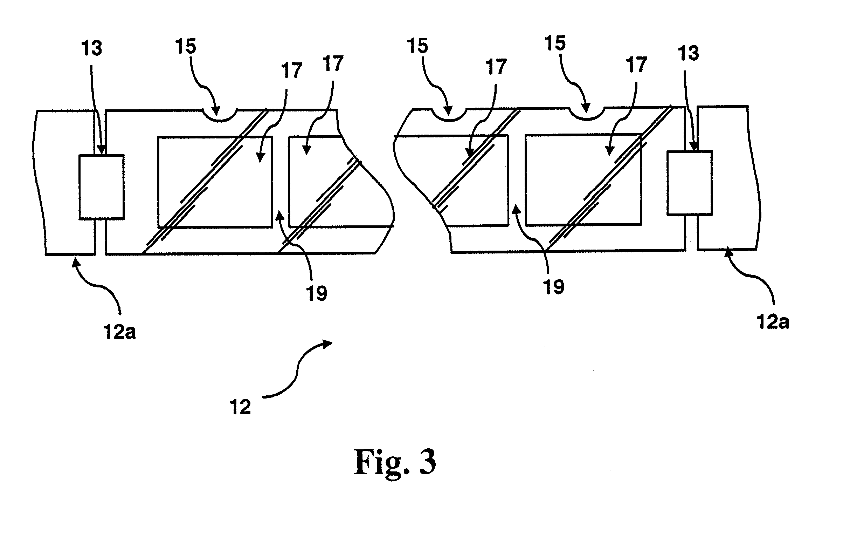

Referring to Figs. 2 and 3, reference numeral 10 denotes an image input device in the form of a scanner apparatus that produces digital images from a photographic film capture medium. In image input device 10, a length of film 12 comprised of a series of separate photographic film strips 12a spliced together by means of adhesive connectors 13 is fed from a supply reel 14 past a splice detector 16, a notch detector 18, and a film scanner 21 to a take-up reel 22. Splice detector 16 serves to generate output signals that identify the beginning and end of each separate film order which is made up of a series of original image frames 17 on a single continuous photographic film strip 12a. Notch detector 18 senses notches 15 formed in the photographic film strip adjacent to each original image frame and provides output signals that are used to correlate information generated in the film scanner with specific original image frames. The scanner computer 24 coordinates and controls the components of the film scanner 21. Film scanner 21 scans, that is, photometrically measures in known manner, the density values of at least three primary colors in a plurality of regions on the photographic film strip 12a including the original image frames 17 as well as the inter-frame gaps 19. The photometric measurements corresponding to a given original image frame constitute a source digital image. The term regions as used herein can be taken to mean individual image pixels or groups of pixels within a digital image or pixels corresponding to the photometric measurements of the inter-frame gaps, that is, the regions of unexposed film between image frames. The digital images corresponding to the original image frames and the signals from detectors 16, 18, and film scanner 21 corresponding to the inter-frame gaps 19 are fed to a digital image processor 20 which calculates a color correction transform. The digital image processor 20 applies the color correction transform to the source digital images and transmits the processed digital images to image output device 30 in the form of a digital color printer. Image output device 30 operates to produce a hard copy photographic print from the processed digital images. Alternatively, the processed digital images can be stored and retrieved for viewing on an electronic device or on a different digital output device.

*The digital image processor*

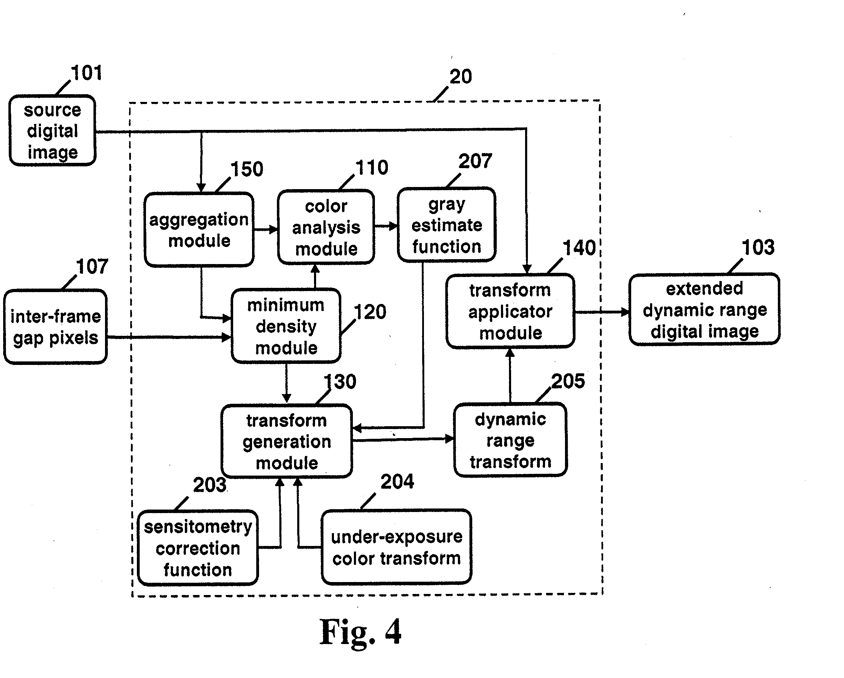

The digital image processor 20 shown in FIG. 1 is illustrated in more detail in FIG. 4. The source digital images 101 are received by the aggregation module 150 which produces an analysis digital image from each received source digital image. The analysis digital image is a lower spatial resolution version of the source digital image that is used by both the color analysis module 110 and the minimum density module 120 for the purposes of analysis. The minimum density module 120 receives the analysis digital images and the inter-gap pixels 107 (derived from the inter-frame gap 19 shown in FIG. 3) and determines a minimum density value for the photographic film strip 12a. The color analysis module 110 receives the set of analysis digital images and calculates a density dependent gray estimate function 207 for the source digital images 101 pertaining to the photographic film strip 12a from which the source digital images 101 are derived. The gray estimate function 207 is used by the transform applicator module 140 to remove an overall color cast from each source digital image 101. The transform generation module 130 also receives the minimum density values and the sensitometry correction function 203 (an example of a non-linear contrast function) and generates a dynamic range transform 205. The dynamic range transform incorporates the sensitometry correction function 203 and a non-linear color adjustment function. The transform applicator module 140 applies the dynamic range transform 205 to the source digital image 101 resulting in an extended dynamic range digital image 103. Each source digital image is processed resulting in a set of extended dynamic range digital images 103.

*Aggregation module*

The source digital images 101 produced with film scanner 21 are of high spatial resolution, that is, digital images that contain a large number of pixels, typically on the order of more that a million, as required to produce sufficiently detailed images when printed. In general, the calculation of analysis variables does not require such high resolution images to provide robust results. The set of analysis digital images are generated as lower spatial resolution versions of the source digital images 101, typically containing approximately one thousand pixels each. Although there are a variety of methods that can be used to produce a lower spatial resolution version of a digital image, the aggregation module 150 uses a block averaging method to generate the analysis digital images.

*Color analysis module*

The set of source digital images 101 must be processed to correct for the color induced by the photographic film recording medium. The present invention uses the method disclosed by Kwon and others. in commonly-assigned US-A-5,959,720 to remove the overall color cast of the source digital images 101. The method disclosed by Kwon and others can be summarized by the following steps. Minimum densities relating to the red, green, and blue pixel data are determined by analyzing the pixels from the inter-frame gaps 19 of the photographic film strip 12a. The values of the minimum densities, $R_{min}$, $G_{min}$, and $B_{min}$ represent an initial estimate of the color balance position. Next the pixel data of each analysis digital image is analyzed to determine if the corresponding source digital image 101 was affected by an artificial illuminant light source. The analysis digital images that are determined to be possibly affected by an artificial illuminant light source are not used in the subsequent color analysis operation. Next, the pixels of the remaining analysis digital images are subject to a rejection criterion that rejects pixels that are too colorful. The remaining pixels of the analysis digital images are then used in a multi-linear regression model that results in a density dependent gray estimate function 207 referred to as F(). The multi-linear density dependent gray estimate function is later used to adjust the color balance of each of the source digital images 101.

*Sensitometry analysis module*

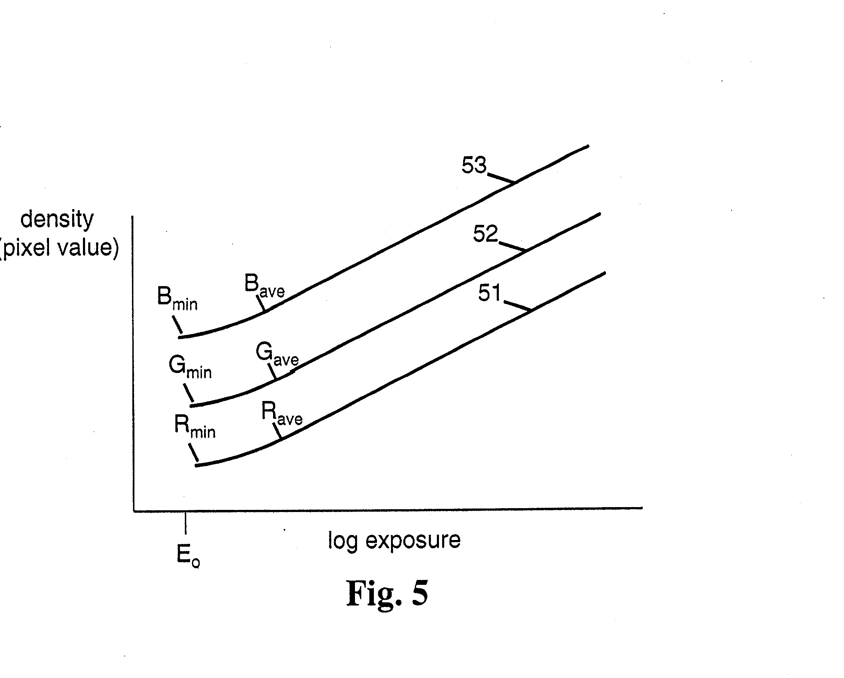

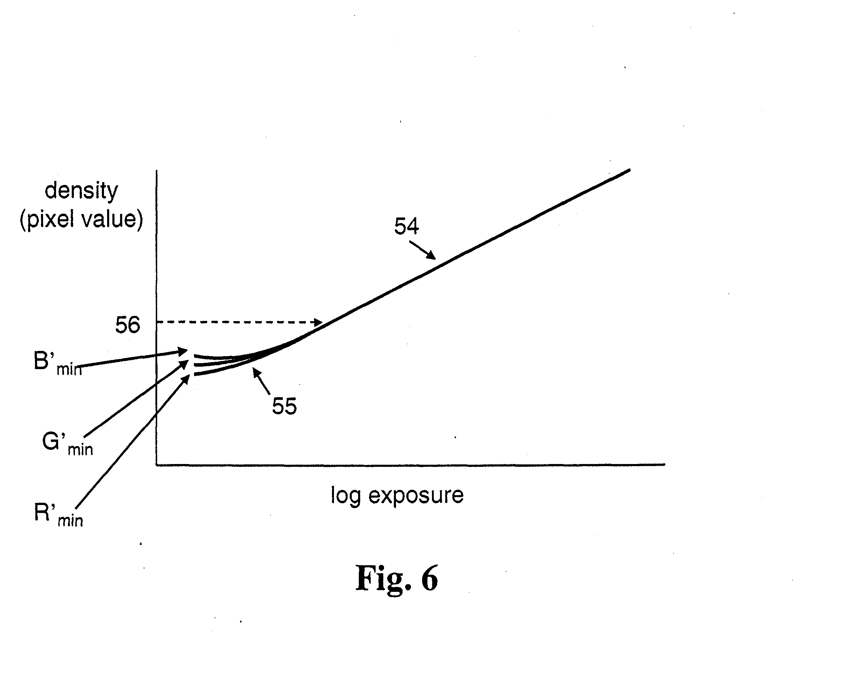

The transform generation module 130 shown in FIG. 4 generates a dynamic range transform 205 in a multiple step process. The first step uses the gray estimate function 207 to identify an average color balance point for the set of source digital images 101. The average color balance point has three color components for red, green, and blue referred to as $R_{ave}$, $G_{ave}$, and $B_{ave}$ respectively. The average color balance point is subtracted from each source digital image 101 to remove the overall color cast defined as the initial color balance transform. FIG. 5 illustrates the photo response of a typical photographic film product. The red, green, and blue color records, indicated by curves 51, 52, and 53 respectively, of the photographic film product have characteristically different average densities but have a similar overall functional response shape. FIG. 6 illustrates the functional shape of the photo response curves shown in FIG. 5 after having applied the initial color balance transform.

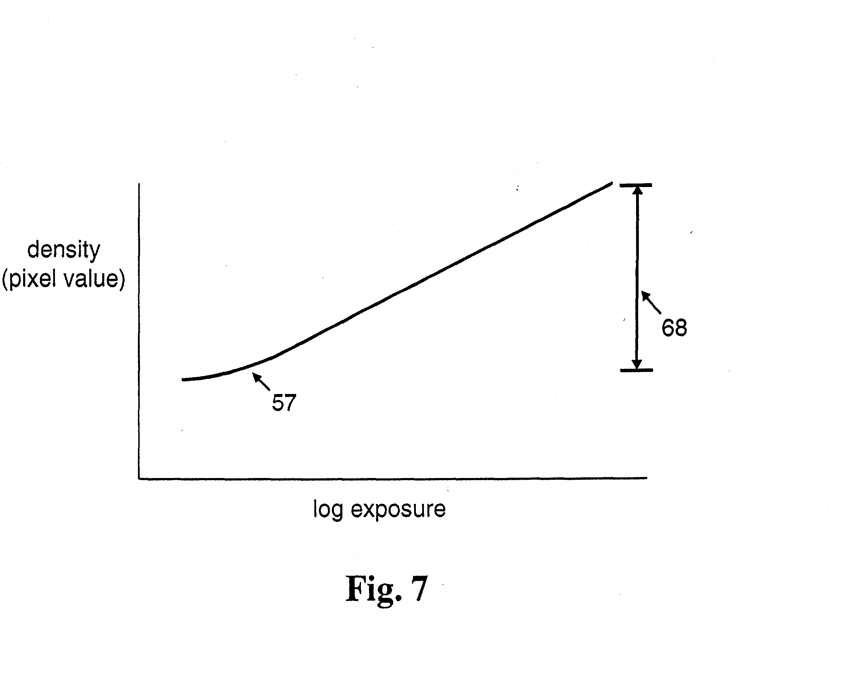

The second step generates an under-exposure color transform 204, which is an example of a non-linear color adjustment function, is designed to improve the consistency between the red, green, and blue photographic response curve shapes depicted in FIG. 6. Note that the red, green, blue response curves (indicated by 54) shown in FIG. 6 have some color differences in the under-exposed domain of response indicated by 55. FIG. 7 illustrates the effect of having applied the under-exposure color transform. As depicted in FIG. 7, the density differences between the red, green, and blue response curves have been removed. However, the under-exposure domain indicated by 57 still has a non-linear shape.

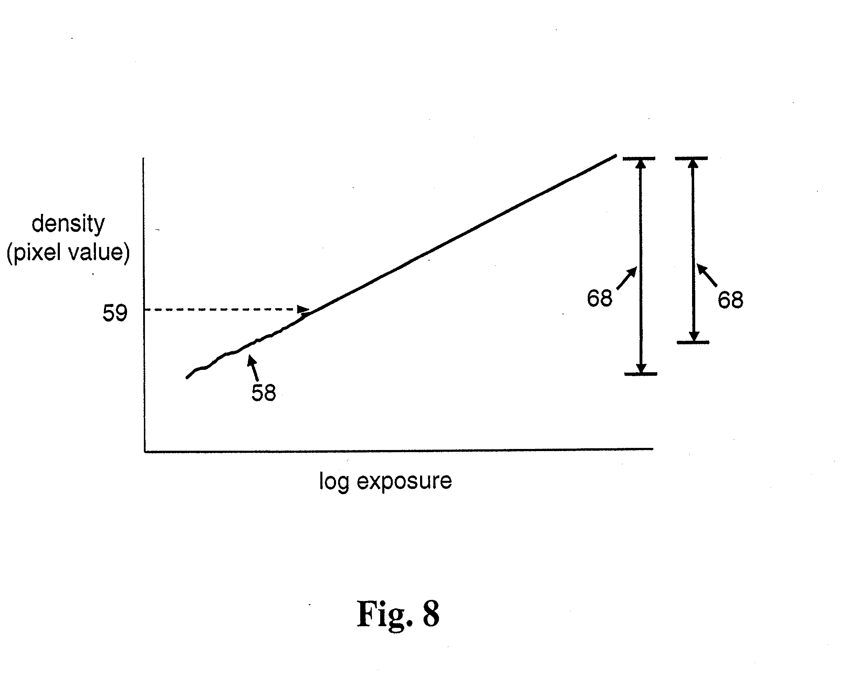

The third step of the transform generation module 130 includes the generation of a contrast sensitometry transform designed to linearize the photographic response curves. When combined with the under-exposure color transform, the application of the contrast sensitometry transform results in the photographic response curves depicted in FIG. 8. Notice that the under-exposure domain, indicated by numeral 58, now has a more linear photographic response shape with only a small level of mismatch in shape among the red, green, and blue response curves. The sufficient exposure domain, denoted by 59 indicates a minimum exposure level that is relatively unaffected by the contrast sensitometry transform and corresponds to point 56 indicated in FIG. 6.

The dynamic range transform 205 can be constructed by cascading the three component transforms into a single transform T[] using formula (1)

$$T[pi] = T_3[T_2[T_1[pi]]] \tag{1}$$

where $T_1[]$ represents the initial color balance transform, $T_2[]$ represents the under-exposure color transform, and $T_3[]$ represents the contrast sensitometry transform, $p_i$ represents a pixel of a source digital image 101 and $T[p_i]$ represents the processed pixel value of the extended dynamic range digital image 103. The dynamic range transform 205 $T[]$ can be implemented as three, one-dimensional look-up-tables (LUT).

It should also be noted that the dynamic range transform can be implemented by processing the entirety of the pixels of the source digital image successively with the component transforms. For example, transform $T_1[]$ can be applied to the source digital image resulting in a modified digital image. Next the transform $T_2[]$ can be applied to the modified digital image pixels to further modify the pixel values and so on. This procedure of successively applying the component transforms, in general, requires more computer resources than the preferred method of combining the component transforms and then applying the combined transform to the image pixel data. However, the successive application method does have the advantage that the intermediate modified pixel values of the entire digital image are simultaneously available at each processing stage.

*Using spatial filters*

In an alternative embodiment of the present invention, the image processing steps are performed by combining transforms $T_1[]$ and $T_2[]$ to form $T_4[]$. The transform $T_4[]$ is applied to a source digital image 101 resulting in a modified digital image. The modified digital image is spatially filtered using an unsharp masking algorithm that forms a low-pass spatial component and a high-pass spatial component. The transform $T_3[]$ is then applied to the unsharp spatial component and the high-pass spatial component is then added to the $T_3[]$ transformed low-pass spatial component. Applying transform $T_3[]$ directly to image pixel data raises the contrast of the processed digital images and thereby extends the dynamic range of the pixel data values. This process also amplifies the magnitude of the noise present in the source digital image. By applying the transform $T_3[]$ to the low-pass spatial component, the noise, which is largely of high spatial frequency character, is not amplified. The resulting dynamic range transform 205 is more complicated to implement and requires more computational resources than the preferred embodiment, however, the processed images have less visible noise. In a further alternative embodiment, a Sigma filter as described by Jong-Sen Lee in the journal article *Digital Image Smoothing and the Sigma Filter,* Computer Vision, Graphics, and Image Processing Vol 24, p. 255-269, 1983, is used as the spatial filter to produce the un-shape spatial component.

*Measuring DMIN*

The minimum density module 120 shown in FIG. 4 calculates a set of minimum pixel values for each color of pixels. From the measured pixels values of a plurality of pixel regions derived from the photographic film strip 12a, a set of minimum pixel values ($R_{min}$, $G_{min}$, $B_{min}$) is determined. Preferably the pixel regions included for this purpose are taken from both the source digital images 101 and the inter-frame gaps 19 depicted in FIG. 3. The purpose is to identify an area on the photographic film strip that received no exposure. Normally, this would be expected to be found in the inter-frame gaps 19. However, it is known that for various reasons there can be some exposure, for example, fogging, in the inter-frame gap regions and for this reason it is desirable to include the source digital image pixel values in determining the minimum pixel values. For some digital imaging systems, the film scanner 21 can not measure the inter-frame gaps 19 and thus for these systems the minimum pixel values must be determined solely from the image pixel data.

*Initial Color Balance Transform*

Referring to FIG. 5, the minimum densities for the three color records of the photographic film response curves are indicated by $R_{min}$, $G_{min}$, and $B_{min}$. The average color balance point values, indicated by $R_{ave}$, $G_{ave}$, and $B_{ave}$ are calculated by evaluating the gray estimate function 207 given (2)

$$R_{ave} = F_R( E_o + \Delta ) \tag{2}$$

$$G_{ave} = F_G( E_o + \Delta )$$

$$B_{ave} = F_B(E_o + \Delta )$$

where the variable $E_o$ is calculated as nominal exposure for which the minimum densities of the three primary color records are achieved, and the quantity $\Delta$ represents an equivalent logarithmic exposure of 0.80 units. The variables $F_R$, $F_G$, and $F_B$ represent the gray estimate function components for red, green, and blue.

*Under-exposure color transform*

The under-exposure color transform is designed to remove the residual color cast for pixels that relate to the under-exposed regions of a photographic film strip 12a. This transform takes the form of three one-dimensional functions (implemented with LUTs) that graduate changes to the pixels as a function of the pixel values. The mathematical formula for the under-exposure color transform is given by (3)

$$R''_i = R'_i + (L'_{min} - R'_{min})\, e\, {-\alpha_r} (R_i' - R'_{min}) \qquad (3)$$

$$G''_i = G'_i + (L'_{min} - G'_{min})\, e\, {-\alpha_g} (G'_i - G'_{min})$$

$$B''_i = B'_i + (L'_{min} - B'_{min})\, e\, {-\alpha b} (B'_i - B'_{min})$$

where the terms $R'_i$, $G'_i$, and $B'_i$ represent the red, green, and blue pixel values to be processed, $R''_i$, $G''_i$, and $B''_i$; represent the red, green, and blue pixel values processed by the under-exposure color transform, $R'_{min}$, $G'_{min}$, and $B'_{min}$ represent the minimum pixel values as processed by the initial color balance transform, and $L'_{min}$ represents the luminance pixel value corresponding to $R'_{min}$, $G'_{min}$, and $B'_{min}$ given by (4).

$$L'_{min} = ( R'_{min} + G'_{min} + B'_{min} ) / 3. \qquad (4)$$

The terms $\alpha_r$, $\alpha_g$, and $\alpha_b$ are exponential constants that graduate the change in color and are given by (5)

$$\alpha_r = R'_o - R'_{min} - \log_e(\upsilon) \qquad (5)$$

$$\alpha_g = G'_o - G'_{min} - 1og_e(\upsilon)$$

$$\alpha_b = B'_o - B'_{min} - \log_e(\upsilon)$$

where the constant $\upsilon$ is set to 0.02. The terms $R'_o$, $G'_o$, and $B'_o$ represent the red green, and blue pixel values corresponding to a properly exposed 18% gray reflector (indicated by 56 in FIG.6). For a typical photographic film, these values represent a minimum exposure for which the film product has achieved a nearly linear photo response. The variables $R'_o$, $G'_o$, and $B'_o$ are calculated by identifying the pixel values corresponding to a density 0.68 above $L'_{min}$. FIG. 7 illustrates the photo response curves after having applied the under-exposure color transform. The photo response curve for the under-exposed domain pixels (indicated by 57) has a significantly reduced color mismatch between the three color response curves and is thus indicated by a single curve. Thus, it will be appreciated by those skilled in the art that the under-exposure color transform incorporates a non-linear adjustment of the color of pixels that relate to an under-exposure condition.

*Contrast sensitivity transform*

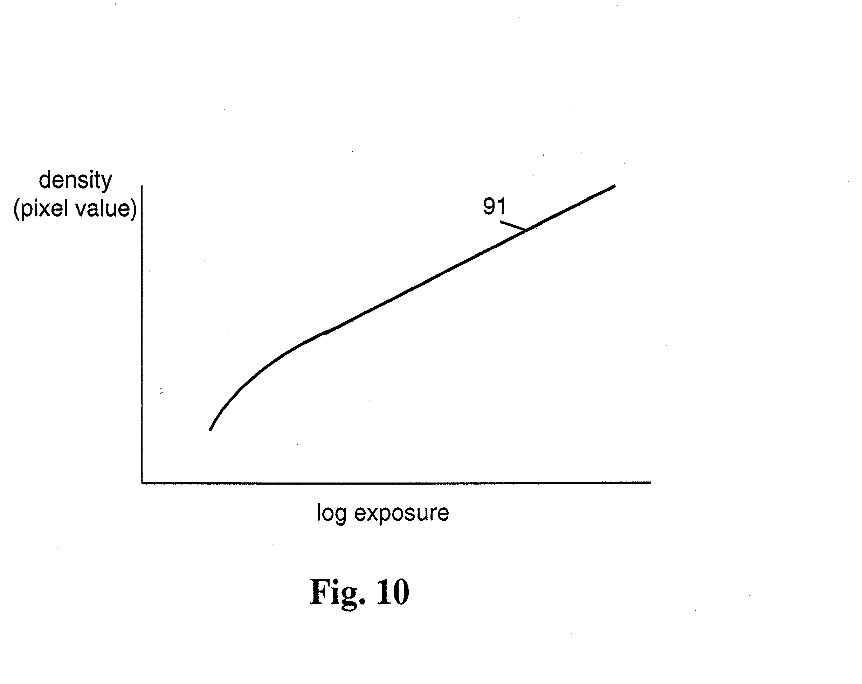

The contrast sensitometry transform is designed to compensate for the non-linear under-exposure photo response of the photographic film. The present invention uses the method disclosed by Goodwin in commonly-assigned US-A-5,134,573. The contrast sensitometry transform LUT consists of a non-linear LUT, shown as 91 in FIG. 10, that is applied individually to the red, green, blue, pixel data. The resulting photographic response for a typical photographic film is depicted in FIG. 8. Note the under-exposed response domain (indicated by 57 in FIG. 7) has been linearized (indicated by 58 in FIG. 8). The numerical dynamic range of the source digital image 101 is represented by the length of line 68 in shown in FIG. 7. The corresponding processed pixel values with the present invention have an extended dynamic range as indicated by the length of line 69 shown in FIG. 8. Thus the application of the contrast sensitometry transform extends the dynamic range of the pixel values.

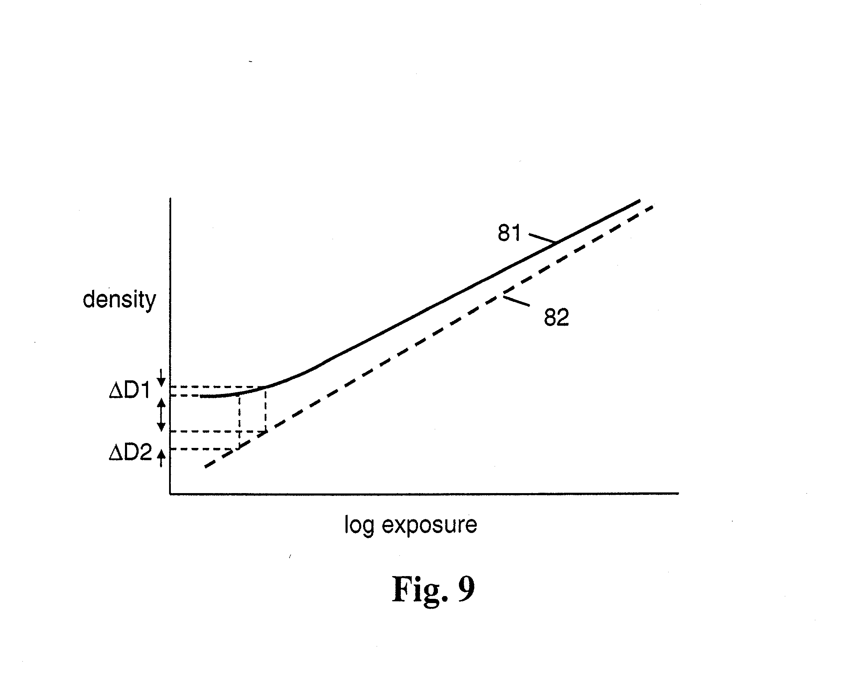

The method taught by Goodwin states that the linear sensitometric response range of digital images captured on photographic film can be increased by applying a LUT constructed using a mathematical formula intended to invert the natural sensitometric response of the photographic film. In particular, the slope corresponding to the under-exposure domain of a photographic film's standard density to log exposure (D-LogE) curve can be restored. Referring to FIG. 9, a slope parameter $\varphi$ describes the adjustment in slope, which theoretically would result in the under-exposure portion of a photographic film sensitometric curve, and is given by (6)

$$\varphi = \frac{\Delta D2}{\Delta D1} \qquad (6)$$

where $\Delta D1$ represents the density difference which would result in an actual film photo response curve (indicated by 81 in FIG. 9) from two nearly equal exposures, and $\Delta D2$ represents the corresponding density difference which would result in the linearized film response curve (indicated by 82) from the same two exposures. The slope parameter $\varphi$ represents the slope adjustment to be applied to a digital image at each density level. However, for the under-exposure portion of the D-LogE curve, as the slope approaches zero, $\Delta D1$ approaches zero and the slope adjustment will increase without limit, approaching infinity. This will amplify the noise characteristics in the processed digital image and can result in visually objectionable noise. An allowed maximum slope adjustment is specified by the parameter $\varphi_{max}$. Slope adjustments below $\varphi_{max}$ are gradually reduced to 1. In that case, the value of the parameter $\varphi$ is substituted by $\varphi'$ given by (7)

$$\varphi' = \varphi \text{ if } \varphi < \varphi_{max} \qquad (7)$$

$$\varphi' = 1 + \frac{A}{B + e^{(C\varphi - D)}} \text{ if } \varphi >= \varphi_{max}$$

where A, B, C, and D are constants which depend upon the maximum slope adjustment. The amount of expected noise contained in the input digital image will affect the selection of optimal parameters A, B, C, D and $\varphi_{max}$.

A less complex mathematical formula for slope adjustments below $\varphi_{max}$ can be formulated. For the case of $\varphi$ less than $\varphi_{max}$, the slope parameter $\varphi$ is substituted by $\varphi'$ given by a simple functional relationship (8):

$$\varphi' = \varphi \text{ if } \varphi < \varphi_{max} \qquad (8)$$

$$\varphi' = 1 + \frac{\varphi_{max} - 1}{k + (\varphi - \varphi_{max})^2} \text{ if } \varphi >= \varphi_{max}$$

where the parameter $K$ establishes the rate of convergence of the function to a minimum value of 1.0. In the preferred embodiment of the present invention $K$ is set equal to 0.5.

The photographic response to light is a characteristic of each manufactured film product. However, photographic films of equivalent photographic speed, that is, ISO rating, have similar response curves. The present invention groups all photographic film products into ISO speed categories - one category for ISO 100, 200, 400, 800, below 100, and above 800. A representative photographic film product is selected for each of the ISO speed categories. For each selected photographic film product, the photo response is measured by photographing a reference photographic film strip, which includes gray, that is, color neutral, patch targets that range in reflectance value. This is accomplished by analyzing the digital images derived from the reference photographic film strip using the film scanner 21. The contrast sensitometry transform is generated from the measured data. The film scanner 21 is used to determine the ISO of the photographic film strip 12a using the stored film type identification tags in the general control computer 40. The database of sensitometric contrast transforms for each ISO speed type are stored in the general control computer 40. For each set of digital images processed, the photographic speed of the photographic film strip 12a is identified and the corresponding sensitometric contrast transform is selected.

The contrast sensitometry transform is calculated by a numeric integration of the function (6) resulting in a LUT relating the measured density to the "linearized" density. A luminance signal response curve is calculated as the average response of the red, green, and blue pixels derived from the reference photographic film strip data. The luminance minimum pixel value is used as the starting pixel value for the numerical integration procedure. A typical contrast sensitometry transform LUT is shown in FIG. 10 (denoted as 91). Thus, it is shown that the contrast sensitometry transform is a non-linear component color transform that raises the contrast of pixels relating to an under-exposure condition.

Applying FUGC

The contrast sensitometry transform LUT is applied to the pixel data in the following manner. First the corresponding color minimum pixel values $R_{min}"$, $G_{min}"$, and $B_{min}"$ ($R_{min}$, $G_{min}$ and $B_{min}$ transformed with $T_2 [T_1[]]$)are subtracted from the $R_i"$, $G_i"$, and $B_i"$ pixel values (source digital image pixels transformed with $T_2 [T_1[]]$). Then the contrast sensitometry transform LUT represented as $T_3[]$ as given by (9) is applied

$$R_i''' = T_3[ R_i" - R_{min}" ] \qquad (9)$$

$$G_i''' = T_3[ G_i"- G_{min}" ]$$

$$B_i''' = T_3[ B_i" - B_{min}" ]$$

where $R_i'''$, $G_i'''$ and $B_i'''$ represent the contrast sensitometry transformed pixel values.

Individual images photographed on the same photographic film strip 12a can have a unique color cast principally due to the uniqueness of the color of the scene illumination source, for example tungsten, electronic flash, daylight, overcast, and so forth. As a further refinement, color balance values for each source digital image are calculated using a color weighted average of the pixels of the extended dynamic range digital image 103 with a two dimensional Gaussian weighting surface designed to remove the effects of the scene illumination source color. The gray estimate function 207 is used to determine color balance values ($GM_k$, $ILL_k$) for the $k^{th}$ extended dynamic range digital image 103. The variables ($GM_k$, $ILL_k$) serve as the center coordinates of the Gaussian weighting surface. The color balance values are calculated using the formula given by (10)

$$GM_b = GM_k + \Sigma_i GM_i \lambda \qquad (10)$$

$$ILL_b = ILL_k + \Sigma_i ILL_i \lambda$$

where the Gaussian weighting factor $\lambda$ is given by (11)

$$\lambda = e -(GM_i - GM_k)^2 / 2 \sigma GM^2 -(ILL_i - ILL_k)^2 / 2 \sigma_{ILL}^2 \qquad (11)$$

and the terms $GM_i$ and $ILL_i$ represent the chrominance values of the extended dynamic range digital image 103. The variables $\sigma GM$ and $\sigma_{ILL}$ determine the aggressiveness of the color balance transform for removing color casts. Reasonable values for the variables $\sigma_{GM}$ and $\sigma_{ILL}$ have been empirically determined to be 0.05 and 0.05 (in equivalent film density units) respectively. Although the present invention uses a Gaussian function to weight the chrominance values, those skilled in the art will recognize that other mathematical functions can be used with the present invention. The most important aspect of the weighting function is the property of weighting large magnitude chrominance values less than small magnitude chrominance values. It should also be noted that a lower resolution version of the extended dynamic range digital image 103 can be used as a surrogate for the pixels used in expressions (10) and (11). Similarly, the analysis digital images described above can be processed with the dynamic range transform 205 to produced the surrogate pixels.

*Under-exposure color transform - alternate transform*

In an alternative embodiment, the under-exposure color transform is calculated using the contrast sensitometry transform $T_3[]$ given by above. The degree of color adjustment is regulated by difference between the input pixel value $x$ and the output pixel value of $T_3[x]$ given by expression (12)

$$R''_i = R'_i + (L'_{min} - R'_{min}) (R'_i - T_3[R'_i]) / (R'_{min} - T_3[R'_{min}]) \qquad (12)$$

$$G''_i = G'_i + (L'_{min} - G'_{min}) (G'_i - T_3[G'_i]) / (G'_{min} - T_3[G'_{min}])$$

$$B''_i = B'_i + (L'_{min} - B'_{min}) (B'_i - T_3[B'_i]) / (B'_{min} - T_3[B'_{min}])$$

where the terms $R'_i$, $G'_i$, and $B'_i$ represent the red, green, and blue pixel values to be processed, $R''_i$, $G''_i$, and $B''_i$ represent the red, green, and blue pixel values processed by the under-exposure color transform, $R'_{min}$, $G'_{min}$, and $B'_{min}$ represent the minimum pixel values as processed by the initial color balance transform, and $L'_{min}$ represents the luminance pixel value corresponding to $R'_{min}$, $G'_{min}$ and $B'_{min}$ given by (4). The term in expression (12) represents the maximum difference between the input pixel value x the output pixel value of $T_3[x]$. The term $(L'_{min} - R'_{min})$ in expression (12) represents the maximum color adjustment imparted.

*Under-exposure color transform - alternate transform*

In further alternative embodiment, the under-exposure color transform is calculated using the photo response curve *P[x]* as in the example shown in FIG. 8 indicated by curve 81. The degree of color adjustment is regulated by difference between the input pixel value *x* and the pixel value given by the function of the photo response curve *R[x]* given by expression (13)

$$R''_i = R'_i + (L'_{min} - R'_{min})(P[R'_i] - R'i) (P[R'_{min}] - R'_{min}) \qquad (13)$$

$$G''_i = G'_i + (L'_{min} - G'_{min}) (P[G'_i] - G'_i) / (P[G'_{min}] - G'_{min})$$

$$B''_i = B'_i + (L'_{min} - B'_{min}) (P[B'_i] - B'_i) / (P[B'_{min}] B'_{min})$$

where the terms $R'_i$, $G'_i$, and $B'_i$ represent the red, green, and blue pixel values to be processed, $R''_i$, $G''_i$, and $B''_i$ represent the red, green, and blue pixel values processed by the under-exposure color transform, $R'_{min}$, $G'_{min}$, and $B'_{min}$ represent the minimum pixel values as processed by the initial color balance transform, and $L'_{min}$ represents the luminance pixel value corresponding to $R'_{min}$, $G'_{min}$, and $B'_{min}$ given by (4). The term in expression (12) represents the maximum difference between the input pixel value *x* the output pixel value of *P[x]*. The term $(L'_{min} - R'_{min})$ in expression (13) represents the maximum color adjustment imparted.

Other features of the invention are included below.

The method wherein the non-linear contrast function used to extend the dynamic range of the source digital image is selected base on the ISO of the photographic film product.

**Claims**

1. A method of extending the dynamic range and transforming the color appearance of a digital image including the steps of:

   a) receiving a source digital image from a capture medium wherein the source digital image includes a plurality of pixel values relating to at least three basic colors;
   b) calculating a color correction transform by using:

i) a non-linear contrast function that is independent of the source digital image and which can be used to extend the dynamic range of the source digital image by correcting an under-exposure condition as a function of the capture medium; and

ii) a non-linear color adjustment function which can be used to correct color reproduction errors as a function of exposure associated with an under-exposure condition as a function of the capture medium; and

c) using the color correction transform and the source of digital image to produce an extended dynamic range digital image.

2. The method of claim 1 wherein the non-linear contrast function raises the contrast of pixels that relate to an under-exposure condition.

3. The method of claim 1 further including the step of calculating color balance values uniquely for the extended dynamic range digital image, and using the color balance values to modify the color appearance of the extended dynamic range digital image.

4. The method of claim 1 wherein the source digital image is derived from an original photographic film strip.

5. The method of claim 4 further including the steps of:

determining a minimum pixel value for each of the plurality of pixel colors; and
using the minimum pixel values to calculate the color correction transform.

6. The method of claim 5 further including the step of using pixels from other digital images derived from the film strip to determine the minimum pixel values.

7. The method of claim 5 further including the step of deriving pixels from inter-frame gap regions of the original photographic film strip which are a function of the exposure of the film strip and using such inter-frame gap pixels in determining the minimum pixel values.

8. The method of claim 1 wherein a spatial filter is used to apply the color correction transform.

9. The method of claim 8 wherein a Sigma filter is used as the spatial filter to apply the color correction transform.

10. A method of extending the dynamic range and transforming the color appearance of a source digital image comprising in the following sequence the steps of:

a) receiving a source digital image from a capture medium wherein the source digital image includes a plurality of pixel values relating to at least three basic colors;
b) calculating a first color transform that incorporates a first non-linear adjustment that is independent of the pixels of the source digital image and relates to an under-exposure condition and adjusts the color of the under-exposed pixels;
c) calculating a second color transform that incorporates a second non-linear adjustment function that is independent of the pixels of the source digital image and raises the contrast of pixels that relate to an under-exposure condition;
e) combining the first and second color transforms to calculate a third color transform; and
f) using the third color transform and the source digital image to produce an extended dynamic range digital image.

Fig. 1

Fig. 2

Fig. 3

EP 1 377 031 A2

Fig. 4

Fig. 5

EP 1 377 031 A2

Fig. 6

EP 1 377 031 A2

Fig. 7

EP 1 377 031 A2

density
(pixel value)

59

58

68

68

log exposure

Fig. 8

EP 1 377 031 A2

density

log exposure

Fig. 9

density
(pixel value)

91

log exposure

## Fig. 10